## Europäisches Patentamt
## European Patent Office
## Office européen des brevets

(11) Veröffentlichungsnummer: **0 123 859**
**B1**

(12) # EUROPÄISCHE PATENTSCHRIFT

(45) Veröffentlichungstag der Patentschrift:
01.07.87

(51) Int. Cl.⁴: **C 04 B 35/56,** C 04 B 37/00

(21) Anmeldenummer: **84102958:0**

(22) Anmeldetag: **17.03.84**

(54) Verfahren zum Verbinden von Formteilen mit Siliziumkarbidoberfläche.

(30) Priorität: **30.03.83 DE 3311553**

(43) Veröffentlichungstag der Anmeldung:
**07.11.84 Patentblatt 84/45**

(45) Bekanntmachung des Hinweises auf die Patenterteilung:
**01.07.87 Patentblatt 87/27**

(84) Benannte Vertragsstaaten:
**BE CH DE FR GB IT LI NL**

(56) Entgegenhaltungen:
**EP-A-0 049 447**
**CH-A-203 901**
**DE-A-2 922 953**
**DE-B-1 075 489**
**DE-B-1 796 279**
**GB-A-892 340**
**GB-A-1 426 853**
**GB-A-1 493 239**
**US-A-2 614 947**

(73) Patentinhaber: **Kernforschungsanlage Jülich Gesellschaft mit beschränkter Haftung, Postfach 1913, D-5170 Jülich 1 (DE)**

(72) Erfinder: **Gupta, Ashok Kumar, Artilleriestrasse 49, D-5170 Jülich (DE)**
Erfinder: **Gyarmati, Ernö, Dr., Kopernikusstrasse 14, D-5170 Jülich (DE)**
Erfinder: **Münzer, Rudolf, Bardenberger Strasse 61, D-5120 Herzogenrath 1 (DE)**
Erfinder: **Naoumidis, Aristides, Dr., Kreisbahnstrasse 30, D-5170 Jülich (DE)**

LIBER, STOCKHOLM 1987

## Beschreibung

Die Erfindung bezieht sich auf ein Verfahren zum Verbinden von Formteilen mit Siliziumkarbidoberfläche durch Aufbringen von verkokbarem Bindemittel auf die Verbindungsflächen und Aufheizen zumindest der Trennfuge in Gegenwart von Silizium.

Siliziumkarbidformkörper mit komplizierter Gestalt werden wegen der großen Härte des Materials zweckmäßigerweise aus Teilkörpern hergestellt, die miteinander verbunden werden müssen.

So wird bereits in der US-PS 2 319 323 ein Verfahren angegeben, nach dem Teilkörper aus Kohlenstoff oder Siliziumkarbid oder auch reaktionsgebundenem Siliziumkarbid (als "SiSiC" bezeichnetes überschüssiges Silizium enthaltendes Material) mit einem Kitt aus Kohlenstoff und verkokbarem Bindemittel zusammengefügt und in Gegenwart von Siliziumpulver auf Temperaturen über etwa 1800° C erhitzt werden.

Nach einem weiteren Verfahren gemäß der DE-AS 17 96 279 werden Formkörper mit einem Siliziumkarbidüberzug und Kohlenstoffkern aus Kohlenstoffteilkörpern hergestellt, die mit einem Kitt aus verkokbarem Bindemittel, Kohlenstoff und Siliziumkarbid zusammengefügt und in Gegenwart von überschüssigem geschmolzenen Silizium kurzzeitig auf 1650 bis 2200° C erhitzt werden.

Schließlich wurde in einer älteren Anmeldung (europäische Patentanmeldung 82 109 035.4) ein Verfahren beschrieben, bei dem zumindest eine der Verbindungsflächen (von Teilkörpern aus Siliziumkarbid oder mit Siliziumkarbidoberfläche) überschüssiges Silizium in Form von SiSiC enthalten soll. Die feinpolierten Verbindungsflächen werden bei diesem Verfahren kittfrei aneinandergefügt und vorzugsweise unter Anwendung eines gewissen Preßdruckes von zumindest 0,1 kg/cm$^2$ auf die Verbindungsfläche in einer Inertatmosphäre von 0,13 Pa (10$^{-3}$ Torr) bis 101,3 kPa (1 at.) 15 bis 100 Minuten lang auf 1500 bis 1800° C erhitzt.

Während bei den mit Kitt arbeitenden Verfahren Schwierigkeiten bezüglich der Formtreue der Verfahrensprodukte auftreten, besteht bei den kittfrei arbeitenden Verfahren eine gewisse Unsicherheit bezüglich der fehlerfreien Verbindung der zu verschweißenden Flächen, wobei zusätzlich bei den mit Anpreßdruck arbeitenden Verfahren eine Komplizierung durch die Druckaufprägung gegeben ist.

Der Erfindung liegt daher die Aufgabe zugrunde, ein möglichst einfaches und mit geringem Ausschuß arbeitendes Verfahren zur Verbindung von Siliziumkarbidformteilen zu schaffen.

Das erfindungsgemäße Verfahren, mit dem diese Aufgabe gelöst wird, ist im wesentlichen dadurch gekennzeichnet, daß man das freie Silizium von Verbindungsflächen aus reaktionsgebundenem Siliziumkarbid, die zumindest 15 % freies Silizium enthalten, bis in eine Tiefe von zumindest 100 µm bis etwa 500 µm durch Abdampfen oder insbesonders Ätzbehandlung entfernt oder die SiC-Verbindungsflächen durch Laser-Beschuß entsprechend aufrauht und

entweder die Poren der aufgerauhten Flächen durch wiederholtes Imprägnieren mit verkokbarem Material und jeweils anschließendes Verkoken mit Kohlenstoff beladt, die Verbindungsflächen vereinigt

oder ein siliziumhaltiges Kunstharzchip an bzw. zwischen die Verbindungsflächen bringt und das Harz verkokt

und schließlich den Kohlenstoff der Trennfuge der vereinigten Verbindungsflächen mit dem vorhandenen oder der Trennfuge von außen zugeführtem Silizium bei 1500 bis 2000 ° C in Siliziumkarbid umwandelt.

Das Si kann der Trennfuge als Schmelze zugeführt werden, vorzugsweise wird jedoch eine Si-Pulver enthaltende Packung vor dem Erhitzen um die Trennfuge gebracht. Besonders bevorzugt wird eine Packung aus Silizium abgebendem Pulver, speziell aus einer Pulvermischung von Silizium- und Siliziumkarbidpulver vorzugsweise mit Korngrößen in der Gegend von 200 bis 400 µm und einem Verhältnis von etwa 1 : 1.

Bei diesem Verfahren kann auf die Anwendung einer Vakuumanlage verzichtet werden, und Preßvorrichtungen sind nicht erforderlich. Man erhält eine einwandfreie Verbindung der Teilkörper, wie anhand von Schliffbildern nachgewiesen werden kann, auf denen die Nahtstelle nicht mehr sichtbar ist. Der große Vorteil des erfindungsgemäßen Verfahrens, das ohne Vakuumanlage und Preßvorrichtung auskommt, besteht im übrigen auch darin, daß direkt auch an unzugänglichen Stellen und unmittelbar vor Ort geschweißt werden kann.

Reaktionsgebundenes Siliziumkarbid enthält freies Silizium, das die freien Poren des Werkstoffs ausfüllt. Beim erfindungsgemäßen Verfahren wird das freie Silizium aus der Verbindungsfläche, die vorzugsweise etwa 20 % freies Silizium enthält, - insbesondere durch eine Ätzbehandlung - ausgetrieben und so eine bevorzugt etwa 200 bis 500 µm tief "aufgerauhte", Verankerungslücken enthaltende Fläche erzeugt, die zunächst durch eine wiederholte (insbesondere 2- bis 4malige) Behandlung mit verkokbarem Material mit anschließender Verkokung mit feinteiligem Kohlenstoff beladen werden. Als verkokbare Materialien kommen dabei insbesondere die in der einschlägigen Technik bekannten Harze, Teer und Pech etc. in Betracht. Der feinteilige Kohlenstoff reagiert beim weiteren Erhitzen rasch mit infiltrierendem Silizium, das nach Zusammenfügen der Verbindungsflächen an der Trennfuge aufgebracht wird.

Man kann dieses Verfahren vereinfachen, indem man an oder zwischen die Verbindungsflächen eine bis etwa 1 mm dicke, feines Siliziumpulver (insbesondere 10 bis 50 mg pro cm² ; Korngröße ≤ 1 µm; vorbehandelt mit Flußsäure) enthaltende Kunstharzfolie bringt. Besonders zweckmäßig sind Scheiben von 10 bis 100 µm, insbesondere 20 bis 50 µm Dicke aus Phenolformaldehydharz mit Siliziumpulver, dessen Anteil insbesondere um 50 Gew% ausmacht. Beim Erhitzen der Fuge durchläuft das Harz zunächst eine dünnflüssige Phase, wobei es in die Poren infiltriert und bei höheren Temperaturen in Kohlenstoff umgewandelt wird. Bei weiterem Erhitzen, zumindest auf 1600° C, ergibt das in der Trennfuge befindliche Silizium mit dem Kohlenstoff Siliziumkarbid.

Zur Entfernung des freien Siliziums aus der SiSiC-Oberfläche eignet sich z. B. eine Behandlung mit einer Oxidationsmittel, insbesondere HNO₃, enthaltenden HF-Lösung oder mit Kali- oder Natronlauge. Die Säure- oder Laugenbehandlung dauert mehrere Stunden bei Temperaturen zwischen 20 und 80° C. Die Behandlungstemperatur sowie die Konzentration der Lösung sind zwei Variable, die den Abtransport des freien Siliziums bestimmen. Hohe Temperaturen und hohe Konzentrationen sorgen für eine schnelle Entsilizierung. Bei niedrigen Temperaturen und Konzentrationen läuft der Prozeß erst allmählich ab.

In der Regel erhält man nach 4- bis 6stündiger Ätzbehandlung bei Temperaturen von 70 bis 80° C und einer Konzentration der verwendeten Säurelösung bzw. der Lauge von etwa 40 % eine entsilizierte Zone von 400 bis 600 µm Teife. Wichtig ist, daß in der entsilizierten Zone nach der Ätzbehandlung keine Ätzflüssigkeit zurückbleibt. Vorzugsweise wird das Silizium daher mit flüchtigen Säuren herausgelöst, die durch eine abschließende Wärmebehandlung (z. B. 10 Minuten bei 200 bis 300° C im Falle einer Salpetersäure-Flußsäure-Mischung) ausgetrieben werden.

Falls die Entsilizierung mit Säure oder Lauge problematisch ist, kann das Silizium durch Abdampfen entfernt werden. Hierfür reicht ein einfacher Hochtemperaturofen mit Schutzgasspülung. Normalerweise verwendet man Widerstands- oder Induktionsöfen mit Graphit-Heizelement bzw. -Suszeptor und Argon als Schutzgas. Erfahrungsgemäß reicht eine 3stündige Glühung bei 2000° C aus, um das freie Silizium der Probe quantitativ zu verdampfen.

Bei Siliziumkarbidwerkstoffen mit geringem freien Si-Gehalt, bei heißgepreßtem Siliziumkarbid oder an Werkstücken, die aus technischen Gründen weder in einer Ätzlösung noch in einem Abdampfprozeß entsiliziert werden können, empfiehlt sich eine Laserstrahlaufrauhung. Mittels einer hochenergetischen Laserkanone, kombiniert mit automatischem Mikroschrittmacher, kann man innerhalb von einer Stunde bis zu 10⁴ Krater mit einer Tiefe von ca. 500 µm, einem Kraterdurchmesser von 100 bis 200 µm (insbesondere etwa 200 µm) und einem Kraterabstand von 200 bis 500 µm herstellen.

Diese Mikrokrater dienen in den nächsten Schritten als "Verankerungslücken" für den herzustellenden SiC-Verbund.

Für die Beladung der Poren mit Kohlenstoff gibt es mehrere Möglichkeiten. Ein am häufigsten verwendetes Verfahren ist die Tränkung der Poren mit einer Harzlösung und anschließendes Verdampfen des Lösungsmittels sowie Verkoken des Harzrückstandes. Möglich ist auch die Imprägnierung mit einem Flüssigharz oder dem flüssigen Monomeren eines Kunstharzes, das in den Poren mittels eines Katalysators oder eines gasförmigen Reaktanten gehärtet wird. Besonders geeignet sind hierfür eine niederviskose Phenolformaldehydharzlösung oder ein katalytisch polymerisierendes Harz auf Furfural- und/oder Furfurylalkoholbasis. Eine Verkokung schließt auch hier den Vorgang ab.

Um eine ausreichende Abscheidung von Kohlenstoff innerhalb der Poren zu gewährleisten, muß entsprechendes flüssiges verkokbares Material bzw. eine flüssige Verdünnung wie z. B. Harzlösung verwendet werden. Besonders zweckmäßig ist die mehrfache Imprägnierung mit verkokbarem Material bzw. Harz in der Wärme mit jeweils anschließender Verkokung der in den Poren aufgenommenen (Harz) Mengen.

Die kohlenstoffbeladenen Oberflächen des so behandelten Siliziumkarbidkörpers werden ggf. kurz mechanisch überarbeitet, um eine äußere Verkokungsschicht zu beseitigen und dann in engen Kontakt gebracht und bei Temperaturen über 1500° C, insbesondere bei 1600 bis 1700° C, mit flüssigem Silizium behandelt.

Nachfolgend wird die Erfindung anhand eines Beispiels näher erläutert.

### Beispiel

Vierkantstäbe aus SiSiC wurden an den Enden vier Stunden lang einer 1 : 1-Mischung von konzentrierter Salpetersäure und 40 %iger Flußsäure bei 80° C ausgesetzt. Die gründlich gewaschenen Stabenden wurden zur Entfernung des Wassers mit Alkohol gespült und durch Erwärmen abschließend getrocknet und dann in eine mit Äthylacetat verdünnte 20 %ige Phenol/Formaldehydharzlösung (PFH-Harz DF 1949 der Bakelite GmbH, Iserlohn) getaucht, "getrocknet" und einer Verkokungsbehandlung bei 800° C unterworfen. Diese Harzimprägnierung und Verkokung wurde zweimal wiederholt

Die Oberfläche wurde dann feinpoliert und die zusammengefügten Stäbe eingespannt auf 1750° C erhitzt und der Trennfuge mittels eines Graphitdochts flüssiges Silizium zugeführt. Nach Einsetzen der Reaktion wurde der zu verbindende Körper 10 Minuten bei 1750° C belassen und dann im Ofen abgekühlt.

Es ergab sich eine nahtfreie Vereinigung der, wie beschrieben, verbundenen Stäbe.

## Patentansprüche

1. Verfahren zum Verbinden von Formteilen mit Siliziumkarbidoberfläche durch Aufbringen von verkokbarem Bindemittel auf die Verbindungsflächen und Aufheizen zumindest der Trennfuge in Gegenwart von Silizium, dadurch gekennzeichnet, daß man das freie Silizium von Verbindungsflächen aus reaktionsgebundenem Siliziumkarbid, die zumindest 15 % freies Silizium enthalten, bis in eine Tiefe von zumindest 100 μm bis etwa 500 μm durch Abdampfen oder insbesondere Ätzbehandlung entfernt oder die SiC-Verbindungsflächen durch Laser-Beschuß entsprechend aufrauht und

entweder die Poren der aufgerauhten Flächen durch wiederholtes Imprägnieren mit verkokbarem Material und jeweils anschließendes Verkoken mit Kohlenstoff belädt, die Verbindungsflächen vereinigt

oder ein siliziumhaltiges Kunstharzchip an bzw. zwischen die Verbindungsflächen bringt und das Harz verkokt·

und schließlich den Kohlenstoff der Trennfuge der vereinigten Verbindungsflächen mit dem vorhandenen oder der Trennfuge von außen zugeführtem Silizium bei 1500 bis 2000° C in Siliziumkarbid umwandelt.

2. Verfahren nach Anspruch 1, dadurch gekennzeichnet, daß für die Verbindung Formteile mit etwa 20 % freiem Silizium in der Verbindungsfläche verwendet werden.

3. Verfahren nach Anspruch 1 oder 2, dadurch gekennzeichnet, daß die Oberflächenaufrauhung bis in eine Tiefe von 200 bis 500 μm vorgenommen wird.

4. Verfahren nach Anspruch 1, dadurch gekennzeichnet, daß bei der Laser-Behandlung Krater von etwa 500 μm Tiefe und etwa 200 μm Durchmesser mit einem Abstand von 200 bis 500 μm erzeugt werden.

5. Verfahren nach einem der Ansprüche 1 bis 3, dadurch gekennzeichnet, daß die Ätzbehandlung mit oxidationsmittelhaltiger Flußsäure erfolgt.

6. Verfahren nach einem der vorangehenden Ansprüche, dadurch gekennzeichnet, daß als verkokbares Material niederviskose Phenolformaldehydharzlösung oder katalytisch polymerisierendes Harz auf Furfural- und/oder Furfurylalkoholbasis verwendet wird.

7. Verfahren nach einem der vorangehenden Ansprüche, dadurch gekennzeichnet, daß Harzauftrag und Verkokung 2- bis 4mal durchgeführt werden.

8. Verfahren nach einem der Ansprüche 1 bis 5, dadurch gekennzeichnet, daß als siliziumhaltiges Kunstharzchip eine 10 bis 100 μm, insbesondere 20 bis 50 μm dicke Schiebe aus Phenolformaldehydharz mit Siliziumpulver mit einer Korngröße von maximal 1 μm verwendet wird das insb. um 50 Gew.% ausmacht.

9. Verfahren nach einem der Ansprüche 1 bis 7 dadurch gekennzeichnet, daß für die Silizierung eine Packung aus Silizium abgebendem Pulver, insbesondere aus einer Pulvermischung von Silizium- und Siliziumkarbidpulver vorzugsweise mit Korngrößen in der Gegend von 200 bis 400 μm und einem Verhältnis von etwa 1 : 1 verwendet wird.

10. Verfahren nach einem der vorangehenden Ansprüche, dadurch gekennzeichnet, daß die Umwandlung des Kohlenstoffs in der Trennfuge in Siliziumkarbid bei 1600 bis 1700° C erfolgt.

## Claims

1. Method for joining shaped parts having silicon carbide surfaces by applying cokable binding agent to the connecting surfaces and heating at least the joint gap in the presence of silicon, characterised in that the free silicon is removed from connecting surfaces of reaction-combined silicon carbide, which contain at least 15 % free silicon, up to a depth of at least 100 μm to about 500 μm by evaporation or, especially, etching treatment, or the SiC connection surfaces are appropriately roughened by laser bombardment, and

either the pores of the roughened surfaces are loaded with carbon by repeated impregnation with cokable material and subsequent coking each time, the connecting surfaces are joined,

or a silicon-containing synthetic resin chip is put against or between the connecting surfaces, and the resin is coked,

and finally the carbon of the joint gap of the joined connecting surfaces is converted at 1500 to 2000°C with the silicon present or supplied to the joint gap from the outside into silicon carbide.

2. Method according to claim 1, characterised in that shaped parts having approximately 20 % free silicon in the connecting surface are used for the connection.

3. Method according to claim 1 or 2, characterised in that the surface roughening is carried out to a depth of 200 to 500 μm.

4. Method according to claim 1, characterised in that craters having a depth of approximately 500 μm and a diameter of approximately 200 μm with a spacing of 200 to 500 μm are produced in the laser treatment.

5. Method according to one of claims 1 to 3, characterised in that the etching treatment is carried out with hydrofluoric acid containing oxidising agent.

6. Method according to one of the preceding claims, characterised in that low-viscosity phenol formaldehyde resin solution or catalytically polymerising resin having a base of furfural and/or furfuryl alcohol is used as cokable material.

7. Method according to one of the preceding claims, characterised in that resin application and coking are carried out 2 to 4 times.

8. Method according to one of claims 1 to 5, characterised in that as the silicon-containing synthetic resin chip there is used a disc, 10 to 100 μm especially 20 to 50 μm in thickness, of phenol formaldehyde resin with silicon powder having a particle size of at the most 1 μm, this constituting especially about 50 % by weight.

9. Method according to one of claims 1 to 7, characterised in that a package of silicon-dispensing powder, especially a powder mixture of silicon and silicon carbide powder preferably with particle sizes in the vicinity of 200 to 400 μm and a proportion of about 1 : 1, is used for the siliconisation.

10. Method according to one of the preceding claims, characterised in that the conversion of the carbon in the joint gap to silicon carbide is effected at 1600 to 1700° C.

## Revendications

1. Procédé de liaison de pièces façonnées à surface en carbure de silicium, en déposant un agent liant cokéfiable sur les surfaces de liaison, et en chauffant au moins la ligne de joint en présence de silicium, caractérisé en ce qu'il consiste à enlever par évaporation, ou notamment par un traitement de décapage, jusqu'à une profondeur d'au moins 100 microns à 500 microns environ, le silicium libre des surfaces de liaison en carbure de silicium combiné par réaction, qui contiennent au moins 15 % de silicium libre, ou à rendre rugueuses les surfaces de liaison en SiC d'une manière adéquate par bombardement laser, et
ou bien, à charger de carbone les pores des surfaces rendues rugueuses par imprégnation répétée de matière cokéfiable et, ensuite, par cokéfaction et à réunir les surfaces de liaison,
ou bien, à mettre une plaquette de résine de matière plastique contenant du silicium sur ou entre les surfaces de liaison, et à cokéfier la résine,
et, enfin, à transformer en carbure de silicium entre 1500 et 2000° C, le carbone de la ligne de joint des surfaces de liaison réunies avec le silicium présent ou amené de l'extérieur à la ligne de joint.

2. Procédé suivant la revendication 1, caractérisé en ce qu'il consiste à utiliser, pour la liaison, des pièces façonnées ayant environ 20 % de silicium libre dans la surface de liaison.

3. Procédé suivant la revendication 1 ou 2, caractérisé en ce qu'il consiste à rendre la surface rugueuse jusqu'à une profondeur de 200 à 500 microns.

4. Procédé suivant la revendication 1, caractérisé en ce qu'il consiste à produire, lors du traitement par un laser, des cratères d'une profondeur de 500 microns environ et d'un diamètre de 200 microns environ, à un intervalle de 200 à 500 microns.

5. Procédé suivant l'une des revendications 1 à 3, caractérisé en ce qu'il consiste à effectuer le traitement de décapage par de l'acide fluorhydrique contenant un agent oxydant.

6. Procédé suivant l'une des revendications précédentes, caractérisé en ce qu'il consiste à utiliser comme matière cokéfiable une solution de résine phénolformaldéhyde à faible viscosité, ou une résine polymérisée catalytiquement à base de furfural et/ou d'alcool furfurylique.

7. Procédé suivant l'une des revendications précédentes, caractérisé en ce qu'il consiste à effectuer le dépôt de résine et la cokéfaction de 2 à 4 fois.

8. Procédé suivant l'une des revendications 1 à 5, caractérisé en ce qu'il consiste à utiliser comme pastilles de résine de matière plastique contenant du silicium, un disque de 10 à 100 microns, et notamment de 20 à 50 microns d'épaisseur en résine de phénolformaldéhyde, avec de la poudre de silicium ayant une granulométrie de 1 micron au maximum, qui représente notamment 50 % en poids.

9. Procédé suivant l'une des revendications 1 à 7, caractérisé en ce qu'il consiste à utiliser pour la siliciation une composition de poudre donnant du silicium, notamment un mélange de poudre de silicium et de poudre de carbure de silicium ayant de préférence une granulométrie de l'ordre de 200 à 400 microns et en un rapport de 1:1 environ.

10. Procédé suivant l'une des revendications précédentes, caractérisé en ce qu'il consiste à effectuer la transformation du carbone dans la ligne de joint en carbure de silicium, entre 1600 et 1700° C.